# EUROPEAN PATENT APPLICATION

(11) **EP 3 062 272 A1**
(43) Date of publication of application: **31.08.2016**
(21) Application number: 16157376.1
(22) Date of filing: 25.02.2016
(51) Int. Cl.: G06Q 20/20, G06Q 20/32, G06Q 20/36, G06Q 20/40, G06Q 30/00, G06Q 30/02

(54) **METHOD AND APPARATUS FOR ACCUMULATING MEMBERSHIP POINTS**

(30) Priority: 25.02.2015 KR 20150026436
(71) Applicant: Samsung Electronics Co., Ltd., Gyeonggi-do 16677 (KR)
(72) Inventor: Kim, Kyung Dong, 12262 Namyangju-si (KR); Cho, Boo Hyun, 10551 Goyang-si (KR); Kim, Kyung Duk, 06742 Seoul (KR); Lee, Shin Woo, 04425 Seoul (KR); Hyun, Jung Eun, 12979 Hanam-si (KR)
(74) Representative: Nederlandsch Octrooibureau

(57) **Abstract**

A server is provided to securely provide information to a purchasing user about all memberships for which points may be accumulated in an affiliated store according to affiliated store information. The server includes a communication module to provide one-time card information to a user terminal and to obtain payment completion information, including the one-time card information and affiliated store information from a payment terminal, and a control module to determine at least one membership for which points are accumulated according to the affiliated store information, and determine whether a user of the user terminal has the at least one membership according to the one-time card information. The control module allows the communication module to provide membership information according to the determined results to the user terminal including operations permitting the user to join memberships for which points may be accumulated.

## Description

### PRIORITY

This application claims the benefit of a Korean patent application filed on February 25, 2015 in the Korean Intellectual Property Office and assigned Serial number 10-2015-0026436, the entire disclosure of which is hereby incorporated by reference.

### BACKGROUND OF THE INVENTION

### 1. Field of the Invention

The present disclosure relates to technologies for effectively accumulating various membership points which may be accumulated in affiliated stores.

### 2. Background of the Invention

In general, offline stores may provide point services to manage consumers. For example, if a consumer purchases any goods, 10% of a purchase price may be accumulated as membership points of a corresponding store. These accumulated points may be used in various ways to discount prices of goods or award prizes.

With the development of mobile environments, points may be accumulated and managed using mobile devices such as smartphones. For example, a membership card or a bar code thereon, of a corresponding store may be output on a display of a smartphone, and membership points may be accumulated through recognition of the card or bar code.

In the related art, to accumulate membership points, consumers are required to recognize that a store in which they purchase goods is a store affiliated with a membership, or are required to recognize their membership with the store and are required to directly provide their membership cards to the store. In this case, the consumers directly provide their physical membership cards (e.g., magnetic cards) to the store. Also, if consumers use membership applications of their smartphones, they are required to directly provide their membership information via the application to the store. Therefore, the following issues may occur.

If consumers do not recognize a membership affiliated with a store and do not request the store to accumulate points for their purchase, points for their membership are not accumulated. Further, a store may be affiliated with various types of membership. If there are a plurality of memberships for which points may be accumulated through payment at the corresponding store, it is difficult for consumers to determine that they may accumulate membership points for any of the various types of memberships.

Also, in view of operating a store, if consumers pay for goods without accumulating points by either not identifying their membership or without joining membership for accumulating points, it is difficult for the store to identify and invite consumers to visit the store again or to provide purchase/event information to them, such that consumer management efficiency may be reduced.

The above information is presented as background information only, and to assist with an understanding of the present disclosure. No determination has been made, and no assertion is made, as to whether any of the above might be applicable as prior art with regard to the present disclosure.

### SUMMARY OF THE INVENTION

Aspects of the present disclosure are provided to address at least the above-mentioned problems and/or disadvantages, and to provide at least the advantages described below. Accordingly, an aspect of the present disclosure is to provide an apparatus and method for effectively accumulating various membership points which may be accumulated in affiliated stores.

In accordance with an aspect of the present disclosure, a mobile wallet server for providing a membership service is provided. The server includes a communication module configured to provide one-time payment information (e.g., a token) to a user terminal and to obtain payment completion information, including the one-time card information and affiliated store information, from a payment terminal, and a control module configured to determine at least one membership for which points are accumulated according to the affiliated store information, and determine whether a user of the user terminal has the at least one membership according to the one-time payment information. The control module may allow the communication module to provide membership information according to the determined results to the user terminal.

In accordance with another aspect of the present disclosure, a membership service method in a mobile wallet server is provided. The method includes operations for providing one-time card information to a user terminal, obtaining payment completion information including the one-time card information and affiliated store information with respect to payment achieved using the one-time card information, determining at least one membership for which points are accumulated according to the affiliated store information, determining whether a user of the user terminal has the at least one membership according to the one-time card information, and providing membership information according to the determined results to the user terminal.

In accordance with another aspect of the present disclosure, a user terminal for providing a mobile wallet service is provided. The terminal includes a communication interface configured to provide one-time card information to a payment terminal to perform payment, a display configured to output information about at least one membership for which points are accumulated, which is received from an external server and is associated with the payment, and a processor configured to allow the communication interface to transmit information about selected membership to the external server if an input for selecting one of the at least one membership is received.

In accordance with another aspect of the present disclosure, a method for providing a mobile wallet service in a user terminal is provide. The method includes operations for performing payment for goods in an affiliated store using one-time card information, outputting information about at least one membership for which points are accumulated which is received from an external server and is associated with the payment, and transmitting, if a selection event for one of the at least one membership occurs, information about selected membership to the external server.

In accordance with another aspect of the present disclosure, a computer-readable recording medium is provided having embodied thereon instructions that when being executed by a processor of an electronic device, allow the electronic device to perform a method. The method includes operations for performing payment for goods in an affiliated store using one-time card information, outputting information about at least one membership for which points are accumulated which is received from an external server and is associated with the payment, and transmitting, if a selection event for one of the at least one membership occurs, information about selected membership to the external server.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 is a drawing illustrating a membership accumulation service environment according to various embodiments of the present disclosure;
FIG. 2 is a block diagram illustrating a configuration of an electronic device (e.g., a user terminal) according to various embodiments of the present disclosure;
FIG. 3 is a block diagram illustrating a configuration of a server (e.g., a mobile wallet server) according to various embodiments of the present disclosure;
FIG. 4 is a signal sequence diagram illustrating a process of accumulating membership points according to various embodiments of the present disclosure;
FIG. 5 is a drawing illustrating screens in a process of accumulating membership points according to various embodiments of the present disclosure;
FIG. 6 is a signal sequence diagram illustrating a process of verifying user membership according to various embodiments of the present disclosure;
FIG. 7 is a flowchart illustrating an operation process of a server for providing a membership service according to various embodiments of the present disclosure;
FIG. 8 is a flowchart illustrating a process of accumulating and managing membership points in a user terminal according to various embodiments of the present disclosure;
FIG. 9 is a drawing illustrating membership accumulation screens of a user terminal according to various embodiments of the present disclosure;
FIG. 10 is a block diagram illustrating a configuration of an electronic device according to various embodiments of the present disclosure; and
FIG. 11 is a signal sequence diagram illustrating a process of accumulating membership points according to various embodiments of the present disclosure.

Throughout the drawings, it should be noted that like reference numbers are used to depict the same or similar elements, features, and structures.

### DETAILED DESCRIPTION OF EMBODIMENTS OF THE PRESENT INVENTION

The following description with reference to the accompanying drawings is provided to assist in a comprehensive understanding of various embodiments of the present disclosure as defined by the claims and their equivalents. It includes various specific details to assist in that understanding, but these are to be regarded as merely exemplary. Accordingly, those of ordinary skill in the art will recognize that various changes and modifications of the various embodiments described herein can be made without departing from the spirit and scope of the present disclosure. In addition, descriptions of well-known functions and constructions are omitted for clarity and conciseness.

The terms and words used in the following description and claims are not limited to the bibliographical meanings, but are merely used by the inventors to enable a clear and consistent understanding of the present disclosure. Accordingly, it should be apparent to those skilled in the art that the following description of various embodiments of the present disclosure is provided for illustration purpose only, and not for the purpose of limiting the present disclosure as defined by the appended claims and their equivalents.

It is to be understood that the singular forms "a", "an", and "the", include plural referents unless the context clearly dictates otherwise. Thus, for example, reference to "a component surface" includes reference to one or more of such surfaces.

In the disclosure, the expressions "have", "may have", "include" and "comprise", or "may include" and "may comprise" used herein, indicate existence of corresponding features (e.g., elements such as numeric values, functions, operations or components) but do not exclude the presence of additional features.

In the disclosure, the expressions "A or B", "at least one of A or/and B", or "one or more of A or/and B", and the like used herein, may include any and all combinations of one or more of the associated listed items. For example, the term "A or B", "at least one of A and B", or "at least one of A or B" may refer to all of the cases (1) where at least one A is included, (2) where at least one B is included, or (3) where both of at least one A and at least one B are included.

The expressions such as "1st", "2nd", "first" or "second", and the like used in various embodiments of the present disclosure, may refer to various elements irrespective of the order and/or priority of the corresponding elements, and do not limit the corresponding elements. The expressions may be used to distinguish one element from another element. For instance, both a first user device and a second user device indicate user devices that are different from each other, irrespective of the order or priority of the corresponding elements. For example, a first component may be referred to as a second component and vice versa without departing from the scope of the present disclosure.

It will be understood that when an element (e.g., a first element) is referred to as being "operatively or communicatively coupled with/to" or "connected to" another element (e.g., a second element), it can be directly coupled with/to or connected to the other element, or an intervening element (e.g., a third element) may be present. In contrast, when an element (e.g., a first element) is referred to as being "directly coupled with/to" or "directly connected to" another element (e.g., a second element), it should be understood that there are no intervening elements (e.g., a third element) between the element and the other element directly coupled/connected thereto.

Depending on the situation, the expression "configured to" used herein may be used in place of, for example, the expression "suitable for", "having the capacity to", "designed to", "adapted to", "made to", or "capable of". The term "configured to" does not describe only hardware that is "specifically designed to" perform a function. Instead, under any situation, the expression "a device configured to" may indicate that the device is "capable of" operating together with another device or other components. For example, a "processor configured to perform A, B, and C" may describe a generic-purpose processor (e.g., a central processing unit (CPU) or an application processor (AP)) which may perform corresponding operations by executing one or more software programs which stores a dedicated processor (e.g., an embedded processor) for performing a corresponding operation.

Unless otherwise defined herein, all of the terms used herein, which include technical or scientific terms, may have the same meaning that is generally understood by a person skilled in the art. It will be further understood that terms used herein which are defined in a dictionary and/or commonly used, should also be interpreted as is customary in the relevant related art and not in an idealized or overly formal detect unless expressly so defined herein in various embodiments of the present disclosure. In some cases, even if terms are defined in the specification, they may not be interpreted to exclude various embodiments of the present disclosure.

Electronic devices according to various embodiments of the present disclosure may include at least one of, for example, smartphones, tablet personal computers (PCs), mobile phones, video telephones, electronic book readers, desktop PCs, laptop PCs, netbook computers, workstations, servers, personal digital assistants (PDAs), portable multimedia players (PMPs), Motion Picture Experts Group (MPEG-1 or MPEG-2) audio layer 3 (MP3) players, mobile medical devices, cameras, or wearable devices (e.g., smart glasses, head-mounted-devices (HMDs), electronic apparel, electronic bracelets, electronic necklaces, electronic appcessories, electronic tattoos, smart mirrors, or smart watches).

Hereinafter, the electronic devices according to various embodiments of the present disclosure will be described with reference to the accompanying drawings. The term "user" used herein may refer to a person who uses an electronic device or may refer to a device (e.g., an artificial electronic device) which uses an electronic device.

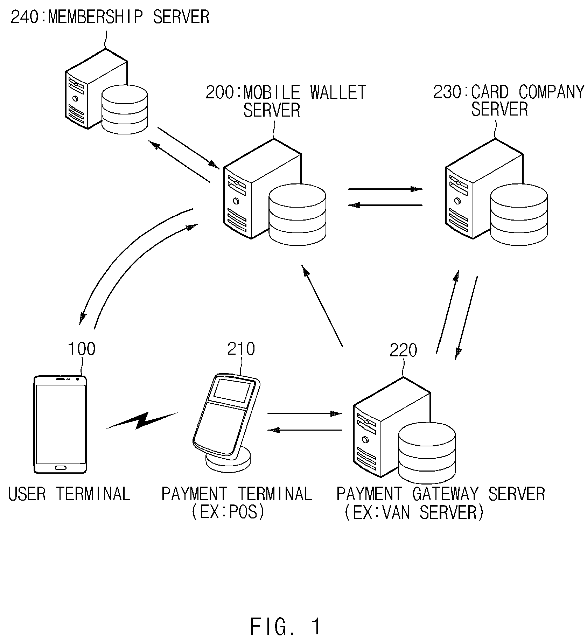

FIG. 1 is a drawing illustrating a membership accumulation service environment according to various embodiments of the present disclosure.

Referring to FIG. 1, a user terminal 100 may be an electronic device on which a payment function is installed. For example, a credit card application which may perform payment may be installed in the user terminal 100. A membership management application for providing a payment function and a membership accumulation function may also be installed in the user terminal 100. According to an embodiment of the present disclosure, the membership management application may store information about a plurality of credit cards and/or debit cards which may perform payment.

A user of the user terminal 100 may purchase goods from a store (e.g., a membership store) using the user terminal 100. For example, a payment terminal 210 of a store or vendor may perform payment by reading card information and the like from the user terminal 100. In general, the payment terminal 210 such as a point of sale (POS) terminal may include means, such as a bar code reader, an optical scanner, or a card reader (e.g., a magnetic stripe reader (MSR)), which may read a bar code attached to goods or a bar code corresponding to payment and/or membership card information. It may be understood that the payment terminal 210 is a computing device, such as a PC, which is coupled to the means.

According to an embodiment of the present disclosure, before performing payment, for example, when executing an application for payment, the user terminal 100 may communicate with an external server and may obtain a payment token for the payment, for example, one-time card information. In an embodiment of the present disclosure, the one-time card information may include a bank information number (BIN), a seven-digit one time code (OTC), and/or a checksum which are included in a one-time real card number, but embodiments are not limited thereto.

The one-time card information may include information used to identify the user of the user terminal 100 in a mobile wallet server 200 and/or to inquire of a membership server 240 about whether the user has a specific membership or memberships. The BIN may be information (e.g., a number) corresponding to a financial institution (e.g., a card company or a bank) of a corresponding real card among information about the real card (e.g., a credit card, debit card or check card) registered in the user terminal 100. The BIN may not be encrypted or modulated in a card company server 230 or the mobile wallet server 200, and may be included in one-time card information transmitted from the mobile wallet server 200 to the user terminal 100. A payment gateway server 220 may determine a target (e.g., the card company server 230) to transmit a payment approval request message, according to the BIN.

In an embodiment of the present disclosure, if the user terminal 100 executes a mobile wallet application to perform payment and if the user selects a credit card to be used to perform the payment, the user terminal 100 may request a predetermined server, for example, the mobile wallet server 200 to transmit one-time card information about the credit card. The mobile wallet server 200 may obtain the one-time card information by communicating with a financial server corresponding to the credit card, for example, the card company server 230 and may provide the obtained one-time card information to the user terminal 100. According to an embodiment of the present disclosure, the user terminal 100 may also include a module which may directly generate the one-time card information without communicating with the mobile wallet server 200 or the card company server 230.

According to an embodiment of the present disclosure, since membership points (or similar accrued value or benefit denominations) accumulation is achieved through payment using one-time card information, security may be improved by preventing real card information and real membership card information from being exposed.

In an embodiment of the present disclosure, if the payment is achieved using the one-time card information, the payment terminal 210 may provide information (e.g., receipt information) associated with the payment to the payment gateway server 220 (e.g., a value added network (VAN) server). The payment gateway server 220 may communicate with the card company server 230 and may provide a payment approval result to the payment terminal 210.

In an embodiment of the present disclosure, the payment gateway server 220 may be omitted. In most cases, since it is inefficient for an affiliated store to have all types and forms of payment terminals corresponding to various card companies, the payment terminal 210 may be provided as an integrated payment terminal and provide payment information (e.g., card information, price information, affiliated store number, goods number, transaction time, and the like) to the payment gateway server 220. The payment gateway server 220 may request the proper card company server 230 to approve the payment information. However, in various embodiments of the present disclosure, the payment terminal 210 may directly connect with the card company server 230. In this case, all functions performed by the payment gateway server 220 may be performed by the payment terminal 210.

When receiving the payment approval result from the card company server 230, the payment gateway server 220 may provide membership information to the mobile wallet server 200. The mobile wallet server 200 may verify at least one membership for which points may be accumulated in the affiliated store which performs the payment and may provide the verified result to the user terminal 100. If a specific membership is selected or identified in the user terminal 100, the mobile wallet server 200 may request the membership server 240 or another membership server to accumulate points for the selected membership.

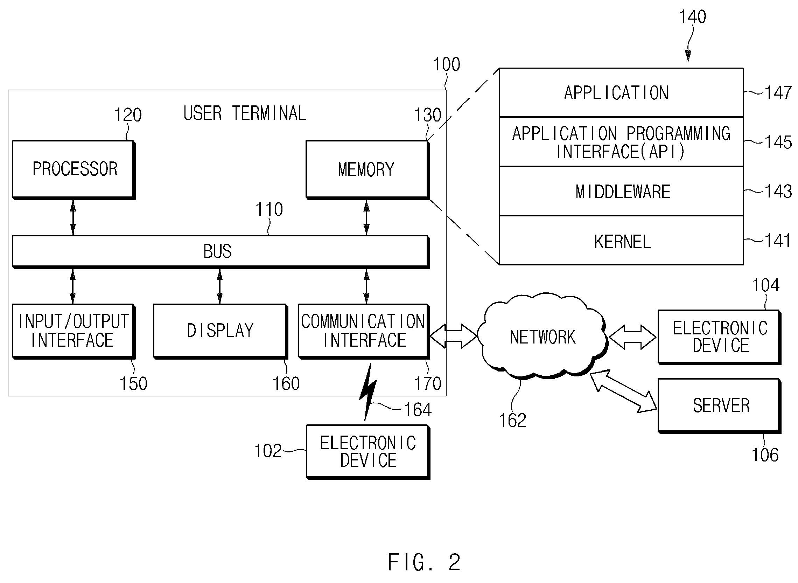

Hereinafter, a description will be given of a detailed configuration of the user terminal 100 with reference to FIG. 2.

FIG. 2 is a block diagram illustrating a configuration of an electronic device (e.g., a user terminal) according to various embodiments of the present disclosure.

Referring to FIG. 2, a user terminal 100 may include a bus 110, a processor 120, a memory 130, an input and output interface 150, a display 160, and a communication interface 170. In various embodiments of the present disclosure, at least one of the components of the user terminal 100 may be omitted from the user terminal 100 or another component may be additionally included in the user terminal 100.

The bus 110 may be, for example, a circuit which may connect the components 120, 130, 150, 160 and/or 170 with each other and may transmit communications (e.g., a control message and/or data) between the components.

The processor 120 may include one or more of a CPU, an AP, and a communication processor (CP). The processor 120 may execute, for example, calculation or data processing about control and/or communication of components of the user terminal 100.

In an embodiment of the present disclosure, the processor 120 may include a payment information generation module. The payment information generation module may generate one-time card information according to information about a payment means (e.g., a credit card, check card, prepaid card, point card, debit card, and the like), which is stored in the memory 130, with or without communication with an external server. For example, the payment information generation module may generate the one-time card information in the form of a card number or a bar code, and may output the generated one-time card information on the display 160. In an embodiment of the present disclosure, the payment information generation module may also transmit the one-time card information as a radio frequency (RF) signal through a near field communication (NFC) module (not shown) or a magnetic stripe transmission (MST) module (not shown), and the like, of the communication interface 170.

The memory 130 may include a volatile memory and/or a non-volatile memory. For example, the memory 130 may store instructions or data associated with components of the user terminal 100. According to an embodiment of the present disclosure, the memory 130 may store software and/or a program 140. The program 140 may include, for example, a kernel 141, middleware 143, an application programming interface (API) 145, and/or an application program 147 (or "an application" or "app"). At least part of the kernel 141, middleware 143, or the API 145 may function as, and be referred to as, an operating system (OS).

The kernel 141 may control or manage, for example, system resources (e.g., the bus 110, processor 120, or memory 130, and the like) used to execute an operation or function implemented in the other programs (e.g., the middleware 143, API 145, or application program 147). Also, as the middleware 143, API 145, or application program 147 accesses a separate component of the user terminal 100, the kernel 141 may provide an interface which may control or manage system resources.

The middleware 143 may play a role as, for example, a go-between, such that the API 145 or the application program 147 communicate with the kernel 141 to communicate data with the kernel 141 and/or other components.

The middleware 143 may also process one or more work requests received from the application program 147 according to a priority. For example, the middleware 143 may assign priority regarding use of system resources (e.g., the bus 110, processor 120, or memory 130, and the like) of the user terminal 100 to at least one of the application program 147. For example, the middleware 143 may perform scheduling or load balancing for the one or more work requests by processing the one or more work requests according to the priority provided to the at least one of the application program 147.

The API 145 may be, for example, an interface in which the application program 147 controls a function provided from the kernel 141 or the middleware 143. For example, the API 145 may include at least one interface or function (e.g., instruction) for file control, window control, image processing, or text control, and the like.

The input and output interface 150 may play a role as, for example, an interface which may transmit instructions or data input from a user or another external device to another component or other components of the user terminal 100. The input and output interface 170 may also output instructions or data received from another component or other components of the user terminal 100 to the user or the other external device.

The display 160 may include, for example, a liquid crystal display (LCD), light emitting diode (LED) display, organic LED (OLED) display, microelectromechanical systems (MEMS) display, or electronic paper display. The display 160 may display, for example, a variety of content (e.g., text, images, videos, icons, or symbols, and the like) to the user. The display 160 may include a touch screen and may receive, for example, touch, gesture, proximity, or hovering inputs using an electronic pen or part of a body of the user.

The communication interface 170 may establish communication between, for example, the user terminal 100 and an external device (e.g., a first external electronic device 102, second external electronic device 104, and/or server 106). For example, the communication interface 170 may connect to a network 162 through wireless communication or wired communication and may communicate with the external device (e.g., the second external electronic device 104 or the server 106).

The wireless communication may use, for example, at least one of long term evolution (LTE), LTE-advanced (LTE-A), code division multiple access (CDMA), wideband CDMA (WCDMA), universal mobile telecommunications system (UMTS), wireless broadband (WiBro), or global system for mobile communications (GSM), and the like, as a cellular communication protocol. The wireless communication may also include, for example, local-area communication 164. The local-area communication 164 may include, for example, at least one of Wi-Fi communication, Bluetooth (BT) communication, NFC, MST communication, or global navigation satellite system (GNSS) communication, and the like.

An MST module may include a local-area wireless communication module which transmits data using an electromagnetic signal. The MST module may generate a pulse according to transmission data and may generate a magnetic field signal according to the generated pulse. The user terminal 100 may transmit the magnetic field signal to an external device (e.g., a POS terminal). The external device (e.g., the POS terminal) may detect a magnetic field signal using an MST reader and may convert the detected magnetic field signal into an electric signal to restore the data.

A GNSS may include at least one of, for example, a global positioning system (GPS), a Glonass, a Beidou navigation satellite system (hereinafter referred to as "Beidou"), or Galileo (i.e., the European global satellite-based navigation system). Hereinafter, the "GPS" used herein may be interchangeably used with the "GNSS". The wired communication may include at least one of, for example, universal serial bus (USB) communication, high definition multimedia interface (HDMI) communication, recommended standard 232 (RS-232) communication, or plain old telephone service (POTS) communication, and the like.

The network 162 may include a telecommunications network, for example, at least one of a computer network (e.g., a local area network (LAN) or a wide area network (WAN)), the Internet, or a telephone network.

Each of the first and second external electronic devices 102 and 104 may be the same as or different from the user terminal 100. According to an embodiment of the present disclosure, the server 106 may include a group of one or more servers. According to various embodiments of the present disclosure, all or some of operations executed in the user terminal 100 may be executed in another electronic device or a plurality of electronic devices (e.g., the first external electronic device 102 and the second external electronic device 104 or the server 106).

According to an embodiment of the present disclosure, if performing any function or service automatically or according to a request, the user terminal 100 may request that another device (e.g., the first external electronic device 102 and the second external electronic device 104 or the server 106) perform at least a partial function associated with the function or service, rather than executing the function or service for itself or in addition to the function or service. The other electronic device may execute the requested function or the added function, and may transmit the executed result to the user terminal 100. The user terminal 100 may process the received result without change or addition, and may provide the requested function or service to the user. For this purpose, for example, cloud computing technologies, distributed computing technologies, or client-server computing technologies may be used.

According to an embodiment of the present disclosure, the electronic device 102 may correspond to one of the devices of FIG.1, such as the above-mentioned POS terminal and include a reader of various forms, or a payment terminal 210 combined with a reader, which may read a bar code, magnetic information, card information, a quick response (QR) code, and the like. The server 106 may correspond to the mobile wallet server 200 of FIG. 1 which communicates with the user terminal 100. Another device or another server (e.g., the payment gateway server 220, card company server 230, membership server 240, and the like of FIG. 1), which communicates with the electronic device 102 or the server 106 and performs the entire payment/membership accumulation without directly communicating with the user terminal 100, may also communicate with the components shown in FIG. 2.

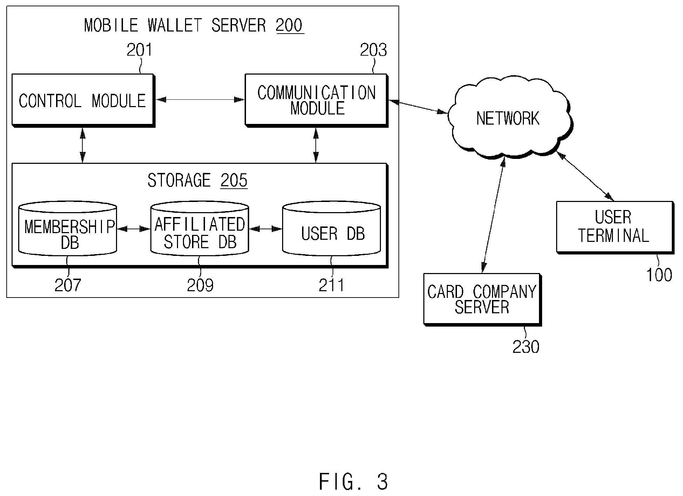

FIG. 3 is a block diagram illustrating a configuration of a server (e.g., a mobile wallet server) according to various embodiments of the present disclosure.

Referring to FIG. 3, a mobile wallet server 200 may include a control module 201, a communication module 203, and storage 205. In addition to the control module 201, the communication module 203, and the storage 205, various additional components may be included in the mobile wallet server 200. However, a description will be given of components 201, 203 and 205 only, thereby excluding contents that may obscure the description of the invention or contents that are known to those skilled in the art.

In an embodiment of the present disclosure, the storage 205 may include at least one of a membership database (DB) 207, an affiliated store DB 209, or a user DB 211. The membership DB 207, affiliated store DB 209 and user DB 211 may be associated with each other and may be stored in the storage 205. For example, the control module 201 may search the affiliated store DB 209 and the membership DB 207 in the storage 205 for membership available for a specific affiliated store.

The communication module 203 may communicate with the user terminal 100 or the card company server 230 through a network. It may be understood that the communication module 203 is a communication circuit for performing a communication function. The communication module 203 may also communicate with the payment terminal 210 of a store, payment gateway server 220, membership server 240, and the like of FIG. 1. The communication module 203 may provide, for example, one-time card information to the user terminal 100. In an embodiment of the present disclosure, if a request for transmitting one-time card information is received from the user terminal 100, the communication module 203 may obtain the one-time card information by communicating with the card company server 230 and may transmit the obtained one-time card information to the user terminal 100.

The communication module 203 may also obtain payment completion information, including one-time card information and information about an affiliated store, from the payment terminal 210 with respect to payment performed in the store. If membership information is generated using the obtained information, the communication module 203 may also provide the membership information to the user terminal 100.

It may be understood that the control module 201 may be a control circuit (e.g., a processor) for performing various functions of the mobile wallet server 200. The control module 201 may determine at least one membership for which points may be accumulated in a currently performed payment using information obtained through the communication module 203 and a DB stored in the storage 205. For example, the control module 201 may determine that points for membership A1, membership A2, and membership A3, may be accumulated in an affiliated store A, according to affiliated store information. The control module 201 may determine whether a user has a membership A1, membership A2, and membership A3, using user identification information included in one-time card information. In an embodiment of the present disclosure, the control module 201 may search a DB stored in the storage 205 and may determine whether the user has a membership A1, membership A2, and membership A3. In another embodiment of the present disclosure, the control module 201 may communicate with the membership server 240 through the communication module 203 and based thereon, may determine membership for which points may be accumulated in an affiliated store and whether the user has each membership.

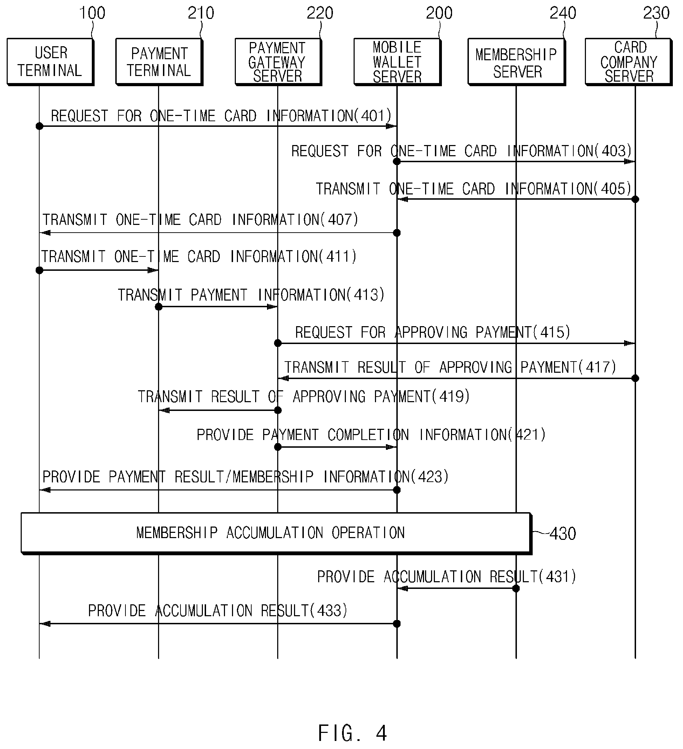

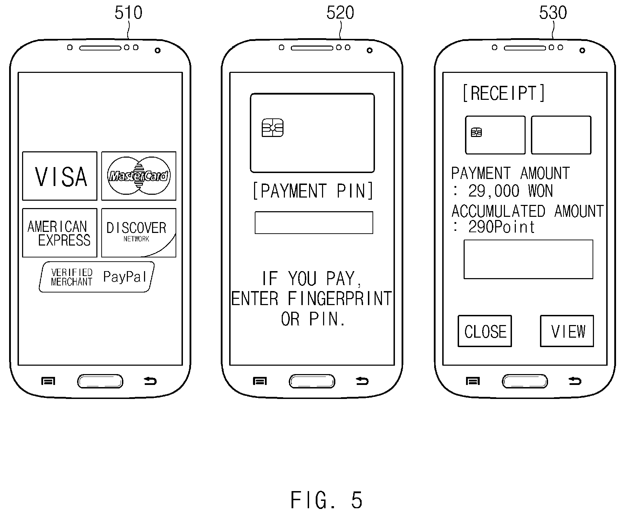

Hereinafter, a description will be given of a membership accumulation process with reference to FIGS. 4 and 5.

FIG. 4 is a signal sequence diagram illustrating a process of accumulating membership points according to various embodiments of the present disclosure.

FIG. 5 is a drawing illustrating screens in a process of accumulating membership points according to various embodiments of the present disclosure.

Referring to FIGS. 4 and 5, in operation 401, to pay for goods in an affiliated store, a user terminal 100 may transmit a request for one-time card information to a mobile wallet server 200. For example, if a specific application (e.g., a mobile wallet application) is executed, the user terminal 100 may provide a list of payment means which may be used to pay or may be selected on a display screen 510 of the user terminal. An embodiment of the present disclosure is exemplified using a credit card as a payment means for convenience of description. However, a debit card, cash card, rechargeable card, or other payment means according to various embodiments of the present disclosure may be included in this or other various embodiments of the present disclosure. For example, if a user of the user terminal 100 selects a VISATM card among cards provided on the display screen 510 of the user terminal, the user terminal 100 may request the mobile wallet server 200 to transmit one-time card information about the VISATM card.

In another embodiment of the present disclosure, if the user selects a specific card, the user terminal 100 may provide a display screen 520 for authenticating the user for the specific card. If correct authentication information is entered on the display screen 520, the user terminal 100 may provide a screen (e.g., a bar code screen, one-time card number screen, and the like) which may perform payment.

When the request for the one-time card information from the user terminal 100 is received, the mobile wallet server 200 may transmit a request for one-time card information about a predetermined card to a card company server 230 in operation 403. For example, the request for the one-time card information received in operation 401 may include card information (e.g., card company information, card type information provided from a card company, and the like) selected by the user terminal 100 and user information (e.g., an account of the user, name of the user, and other information about user authentication). The mobile wallet server 200 may then request the card company server 230 to transmit one-time card information about the user according to the card information and the user information. According to an embodiment of the present disclosure, the user terminal 100 may also include a module which may directly generate the one-time card information without communicating with the mobile wallet server 200 or the card company server 230.

When the request for the one-time card information is received from the mobile wallet server 200, the card company server 230 may generate the one-time card information according to the requested contents and may transmit the generated one-time card information to the mobile wallet server 200 in operation 405. In operation 407, the mobile wallet server 200 may then transmit the one-time card information to the user terminal 100.

The user can then pay using the one-time card information obtained through operations 401, 403, 405 and 407. In operation 411, the user terminal 100 may transmit the one-time card information for payment to a payment terminal 210 of a store or an affiliated store (i.e., a membership affiliated store). For example, the user may allow the payment terminal 210 (e.g., POS) to recognize a bar code displayed on the user terminal 100 or may transmit the one-time card information to the payment terminal 210 (e.g., using an NFC protocol) by moving the user terminal 100 to be close to the payment terminal 210. In an embodiment of the present disclosure, the user terminal 100 may also allow the payment terminal 210 to recognize the one-time card information using an MST scheme.

The payment terminal 210 may have information about goods and/or payment amount in advance before operation 411. When the one-time card information from the user terminal 100 is received in operation 411, the payment terminal 210 may transmit payment information, generated according to the information, to a payment gateway server 220 in operation 413. For example, the payment terminal 210 may transmit information about payment goods, information about a payment amount, affiliated store information (e.g., code), payment time information, and one-time card information to the payment gateway server 220. That is, the payment terminal 210 may generate a payment approval request message including the items (e.g., information) and may transmit the generated payment approval request message to the payment gateway server 220.

In operation 415, the payment gateway server 220 may transmit a payment approval request to the card company server 230. The payment gateway server 220 may transmit a request for approving payment using the one-time card information with respect to an amount of money to the proper card company server 230. When the request for approving the payment is received from the payment gateway server 220, the card company server 230 may determine a payment condition such as an available limit of a card company member corresponding to the one-time card information and may determine whether to approve the payment according to the determined result. In operation 417, the card company server 230 may transmit a result of approving the payment to the payment gateway server 220. Where payment is not approved, the card company server 230 may transmit a result of declining the payment to the payment gateway server 220 and end the process. For convenience of description, a detailed description of the process of declining the payment by the card company server 230 is excluded in this specification.

When the payment approval result is received, the payment gateway server 220 may transmit the payment approval result to the payment server 210 in operation 419. The affiliated store may add up payment approval results accumulated in the payment terminal 210 and may perform management such as sales statistics or profit calculation based thereon.

In operation 421, the payment gateway server 220 may provide payment completion information to the mobile wallet server 200. Some of the information provided to the mobile wallet server 200 in operation 421 by the payment gateway server 220 and the information provided to the payment terminal 210 in operation 419 by the payment gateway server 220 may be duplicated. For example, the payment completion information may include at least one or more of the one-time card information, goods information, affiliated store information (e.g., a corporate registration number), payment amount, payment day and time, unique serial number of the user terminal 100, or identification number of a mobile wallet application installed in the user terminal 100. In an embodiment of the present disclosure, the payment completion information may be directly provided from the card company server 230 to the mobile wallet server 200. In this case, the payment completion information may additionally or alternatively include information for identifying the user terminal 100.

Herein, in an embodiment of the present disclosure, the payment completion information provided to the mobile wallet server 200 may include information for identifying a user of the mobile terminal 100. The user may correspond to a user who is authenticated to request the one-time card information. That is, the user may correspond to only a user who successfully enters his or her fingerprint, PIN password or other authentication on the display screen 520 of FIG. 5 and is authenticated for directing further operations.

The information for identifying the user of the user terminal 100 may be the one-time card information. The one-time card information may include information about a card company and/or a card company member (i.e., a user). The mobile wallet server 200 may then identify the user who performs payment in a store or an affiliated store using the one-time card information.

The mobile wallet server 200 may also determine membership for which points may be accumulated in the affiliated store using affiliated store information. For example, the mobile wallet server 200 may inquire about an affiliated store number, determine at least one or more memberships managed by the affiliated store, and determine whether the identified user has the at least one or more memberships. For example, the mobile wallet server 200 may manage membership A, membership B, and membership C in an affiliated store and may determine that the user has membership A and membership B, but not membership C. The mobile wallet server 200 may provide the determined user membership determination result to the user terminal 100.

The mobile wallet server 200 may also reflect event information and the like applied to a corresponding affiliated store when performing membership accumulation, using affiliated store information. For example, all of a first affiliated store, second affiliated store, and third affiliated store participate in membership A, and 6% of a payment amount is usually accumulated as membership points. In this instance, the first affiliated store may begin a special event that 20% of a payment amount may be accumulated as membership points during a period of the event.

If the first affiliated store participates not only in membership A but in membership B, and if an accumulation rate of membership B is usually 10%, a user who does not recognize about the special event may select membership B because a "usual' accumulation rate of membership B (10%) is larger than that of membership A (6%). However, according to an embodiment of the present disclosure, the mobile wallet server 200 or the user terminal 100 may guide the user to select optimum membership accumulation by automatically providing a predicted accumulated amount of membership based on the each of affiliated store information (for example, the 'special' accumulation rate information).

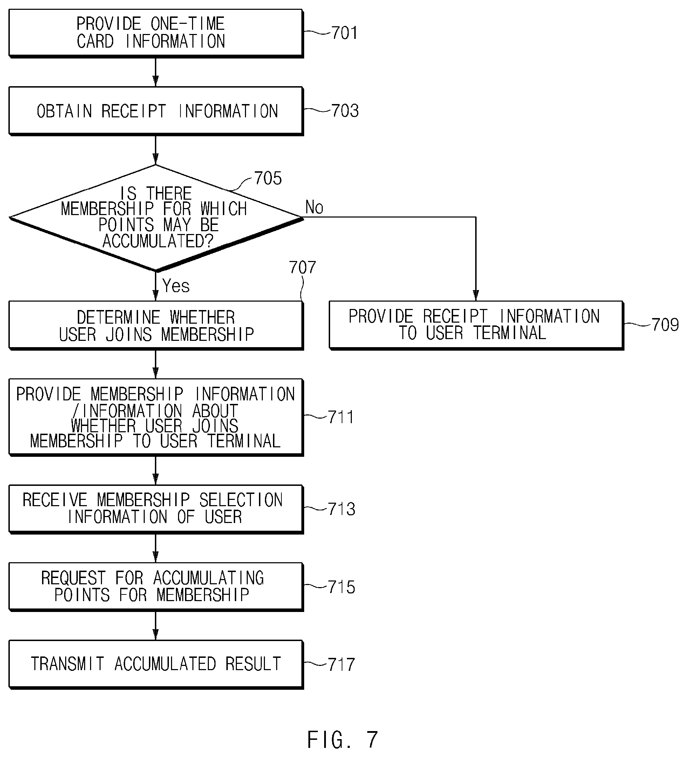

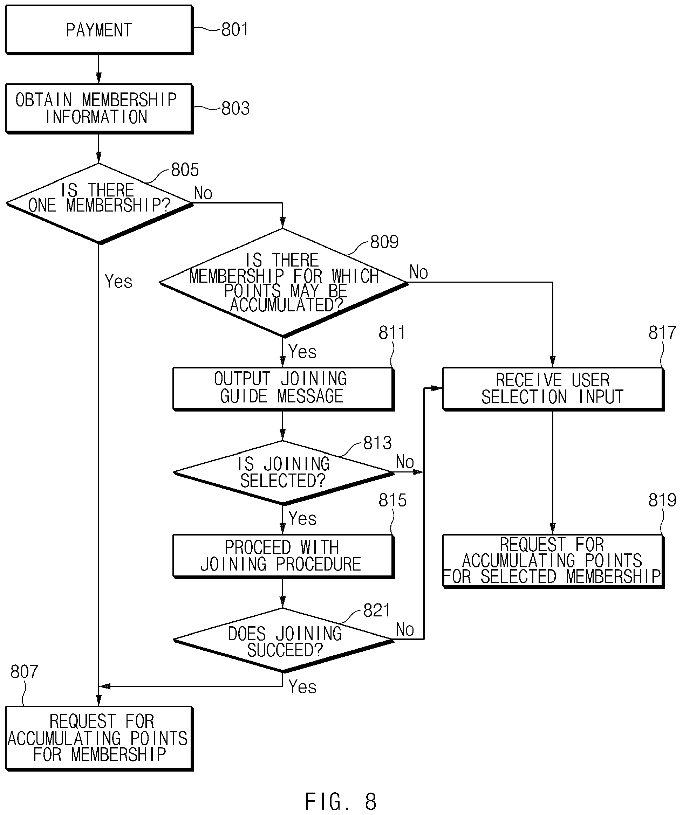

Referring again to FIG. 4, in operation 423, the mobile wallet server 200 may transmit the payment result to the user terminal 100. In an embodiment of the present disclosure, in operation 423, the mobile wallet server 200 may provide the payment result together with the determined result (e.g., membership information) of the above-mentioned determination method to the user terminal 100. Membership information may be provided in various forms according to the determined result as illustrated in FIGS. 7 and 8 in greater detail.

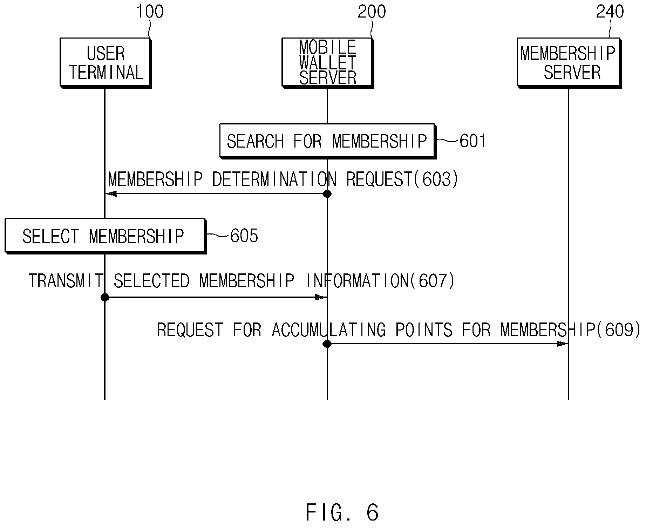

In operation 430, a membership accumulation operation can be performed across one or more of the user terminal 100, payment terminal 210, payment gateway server 220, mobile wallet server 200, membership server 240 and card company server 230. Contents associated with the membership accumulation operation 430 according to selection of the user are described in greater detail with reference to FIG. 6.

When the membership accumulation is completed, the membership server 240 may provide the accumulated result to the mobile wallet server 200 in operation 431. In operation 433, the mobile wallet server 200 may provide the accumulated result to the user terminal 100. For example, 290 points, which are 1% of a payment amount of money of 29,000 Won, may be accumulated as membership points of an affiliated store and displayed to the user on a display screen 530 of FIG. 5.

FIG. 6 is a signal sequence diagram illustrating a process of verifying user membership according to various embodiments of the present disclosure.

Referring to FIG. 6, in operation 601, a mobile wallet server 200 may search for memberships for which points may be accumulated, according to receipt information. In an embodiment of the present disclosure, the mobile wallet server 200 may search its own database constructed through data previously obtained from a membership server 240 (e.g., a local search method). For example, the mobile wallet server 200 may inquire of storage 205 of the mobile wallet server 200 regarding memberships for which a corresponding user may accumulate points in a corresponding affiliated store, according to payment completion information obtained in operation 421 of FIG. 4.

In another embodiment of the present disclosure, the mobile wallet server 200 may provide information which may be used to obtain membership information, to the membership server 240, and may obtain information from the membership server 240 about memberships for which points may be accumulated (e.g., a query search method). For example, operation 601 may include an operation for providing user information and affiliated store information to the membership server 240, and transmitting a request for membership information to the membership server 240 by the mobile wallet server 200. Operation 601 may further include an operation of obtaining the membership information corresponding to the request from the membership server 240 at the mobile wallet server 200.

When the membership for which points may be accumulated is searched, the mobile wallet server 200 may provide a membership determination request to a user terminal 100 in operation 603. At least one or more memberships determined in operation 601 may be sent to the user terminal 100 for selection. Herein, the determined memberships for which points may be accumulated may include memberships that the user may have and memberships that the user can join but has not yet joined. That is, as a result of performing operation 601, the memberships for which points may be accumulated may include a plurality of memberships the user has and may include at least one membership that the user can join but has not yet joined.

In another embodiment of the present disclosure, as a result of performing operation 601, only memberships that the user can join but has not yet joined may be searched for. If it is determined that points may be accumulated for only one membership that the user has, the mobile wallet server 200 may omit operations 603, 605 and 607, and may perform operation 609.

The mobile wallet server 200 may receive an accumulated result (e.g., operation 431 of FIG. 4) and may provide the received accumulated result to the user terminal 100 (e.g., operation 433 of FIG. 4). According to an embodiment of the present disclosure, although it may be determined that points may be accumulated for only one membership that the user has, the mobile wallet server 200 may perform operation 609 for membership accumulation only if the user selects the corresponding membership through operations 603, 605 and 607.

In operation 605, the user terminal 100 may select a membership for which the user wants to accumulate points, among membership information provided in operation 603. The membership for which the user wants to accumulate points may be membership that the user has, and may be a membership that the user can join but has not yet joined.

When information related to the selected membership is transmitted to the mobile wallet server 200 in operation 607, the mobile wallet server 200 may transmit a membership accumulation request to the membership server 240 in operation 609. Operations 431 and 433 of FIG. 4 may be performed from operation 609.

If the information about the selected membership is information about membership the user can join but has not yet joined, the mobile wallet server 200 may proceed with a membership joining procedure. For example, the membership server 240 may provide a page for joining membership to the user terminal 100, collect user identification information, other additional information, and the like from the user terminal 100, and proceed with a membership joining procedure for the user. However, the scope of the present disclosure may not be limited thereto. For example, an information collection and user authentication procedure may be performed in various ways during a membership joining procedure. According to an embodiment of the present disclosure, after the user joins a membership, the mobile wallet server 200 may transmit a request for accumulating points for the corresponding membership to the membership server 240 in operation 609. That is, operations for joining membership may be performed between operations 607 and 609.

FIG. 7 is a flowchart illustrating an operation of a server for providing a membership service according to various embodiments of the present disclosure.

Referring to FIG. 7, the server may correspond to a mobile wallet server 200 of FIG. 1. Hereinafter, contents duplicated by or similar to the above-mentioned contents may be omitted.

Various servers described with reference to FIG. 7 and other drawings used herein may include a communication module for communicating with another server and device, and a control module for processing various requests or works. In various embodiments of the present disclosure, it may be understood that an operation of transmitting or receiving information/data is performed by the communication module and that an operation of determining, generating, and processing information/data is performed by the control module.

Referring to FIG. 7, in operation 701, a mobile wallet server 200 may provide one-time card information to a user terminal 100 of FIG. 1. Operation 701 may include an operation of receiving a request for the one-time card information from the user terminal 100, an operation of transmitting the request to a financial server (e.g., a card company server 230 of FIG. 1), an operation of obtaining the one-time card information from the financial server, and an operation of providing the obtained one-time card information to the user terminal 100.

When the user terminal 100 completes payment using the one-time card information provided in operation 701, the mobile wallet server 200 may obtain receipt information for the payment completion in operation 703. Herein, the receipt information may correspond to payment completion information of operation 421 of FIG. 4.

In operation 705, the mobile wallet server 200 may determine whether there is a membership for which points may be accumulated for the completed payment. The mobile wallet server 200 may use one of a local search method or a query search method to determine whether there is such a membership. In an embodiment of the present disclosure, if it is determined that there is no membership for which points may be accumulated in a corresponding affiliated store as a result of a local search, the mobile wallet server 200 may additionally perform the query search method.

If it is determined that there is a membership for which points may be accumulated in operation 705, the mobile wallet server 200 may determine whether a user of the mobile terminal 100 has a corresponding membership in operation 707. To determine whether the user has a corresponding membership, one-time card information included in the receipt information or any user identification information included in the one-time card information may be used. If it is determined that there is no membership for which points may be accumulated in operation 705, the mobile wallet server 200 may provide the receipt information to the user terminal 100 and may end a member accumulation process in operation 709.

In operation 711, the mobile wallet server 200 may provide information about at least one membership and information about whether the user has each membership to the user terminal 100. For example, information about memberships for which points may be accumulated may be displayed on a display screen.

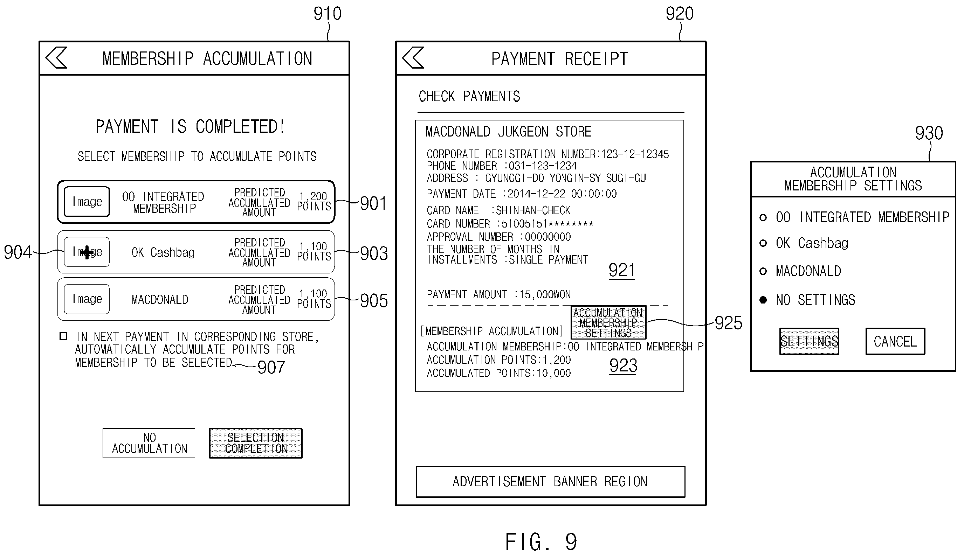

FIG. 9 is a drawing illustrating membership accumulation screens of a user terminal according to various embodiments of the present disclosure.

Referring to FIG. 9, information about memberships 901, 903 and 905 for which points may be accumulated may be displayed on a screen 910. Information (e.g., an icon 904) about whether the user has the membership 903 may be displayed on a certain region in the membership 903. As described above, if there is only one membership for which points may be accumulated and if the user has the corresponding membership, the mobile wallet server 200 may omit operations 711 and 713 and may proceed to operation 715.

When membership selection information of the user is received from the user terminal 100 in operation 713, the mobile wallet server 200 may request the membership server 240 to accumulate points for the selected membership in operation 715. If membership selected by the user is membership the user does not have but wishes to join, the mobile wallet server 200 may proceed with a member joining procedure before performing operation 715. A procedure associated with joining membership is described in greater detail with reference to FIG. 8.

When an accumulated result for the accumulation request of operation 715 is received from the membership server 240, the mobile wallet server 200 may transmit the received accumulation result to the user terminal 100 in operation 717.

FIG. 8 is a flowchart illustrating a process of accumulating and managing membership points in a user terminal according to various embodiments of the present disclosure.

Referring to FIG. 8, in operation 801, a user terminal 100 of FIG. 1 (e.g., a communication interface 170 of FIG. 2) may communicate with a payment terminal 210 of an affiliated store and may pay for goods. To pay for the goods in operation 801, the user terminal 100 may communicate with a mobile wallet server 200 of FIG. 2 to obtain one-time card information. Hereinafter, it may be assumed that payment for goods is achieved using the obtained one-time card information.

In operation 803, the user terminal 100 may receive information about at least one membership for which points may be accumulated in the affiliated store which receives the payment from the mobile wallet server 200, and may output the received information to a user on a display (e.g., a display 160 of FIG. 2). Herein, the information about the at least one membership may include a membership card or a membership name, a predicted accumulated amount of money or membership points, a currently accumulated amount of money or membership points, an accumulation rate, and the like.

If there is only one membership for which points may be accumulated in operation 805, the user terminal 100 may immediately transmit a request for accumulating points for the corresponding membership to the mobile wallet server 200 in operation 807 without waiting for a user selection input. In this case, the user terminal 100 may simply generate a selection event for the one membership. However, in another embodiment of the present disclosure, although there is only one membership, the user terminal 100 may display information about the corresponding membership and may transmit information about a user selection input (e.g., an input for selecting the corresponding membership or an input in which points for the corresponding membership are not accumulated), to the mobile wallet server 200 prior to performing operation 807.

If there is a plurality of memberships for which points may be accumulated in operation 805, the user terminal 100 may determine whether there is membership that a user may join in operation 809. That is, the user terminal 100 may determine whether there is membership for which points may be accumulated in the affiliated store but wherein the user does not have the membership. If it is determined that there is no membership that a user may join in operation 809, the user terminal 100 may proceed to operation 817 and may receive a user selection input for a membership for which points may be accumulated among previously joined memberships and perform a membership accumulation process according to the selection of the other membership. If it is determined that there is memberships that a user may join in operation 809, the user terminal 100 (e.g., a processor 120 of FIG. 2) may display information about memberships according to whether the user has the membership or does not have the membership.

For example, the user terminal 100 may classify and display a list of memberships which the user has, and a list of memberships in which the user is not a member, using a display region, icon, color, or transparency, and the like. This classification may be understood as an indirect joining guide message. However, in various embodiments of the present disclosure, the user terminal 100 may provide a direct joining guide message.

For example, in operation 811, the user terminal 100 may display a predicted accumulated amount of money or membership points and additional benefit information that is available when and if the user joins a membership to guide the user to join the membership. This joining guide message may be provided together in operation 803 by the mobile wallet server 200, and the provided message may be output on the display 160 of the user terminal 100.

If the user does not select a membership joining menu in operation 813, the user terminal 100 may proceed to operation 817 and may receive a user selection input for a membership for which points may be accumulated among previously joined memberships and perform a membership accumulation process according to the selection of the other membership. If the user selects a membership joining menu in operation 813, the user terminal 100 may proceed with a membership joining procedure in operation 815. Specifically, if the user terminal 100 transmits a membership joining request to the mobile wallet server 200, the mobile wallet server 200 may transmit previously stored user information or the one-time card information, type of membership the user wants to join, points to be immediately accumulated, and the like, together with the membership joining request, to a membership server 240 of FIG. 1. If additional information is needed to join the membership, the membership server 240 may request that the user terminal 100 transmit the corresponding information.

The user terminal 100 may transmit the corresponding information to the membership server 240 through the mobile wallet server 200 to join the membership. Alternatively, in an embodiment of the present disclosure, the user terminal 100 may directly communicate with the membership server 240 to complete joining and may perform an additional membership accumulation operation for the mobile wallet server 200.

If user joining selection for membership the user may join is not achieved in operation 813, the user terminal 100 may receive a user selection input for a membership for which points may be accumulated among previously joined memberships and perform a membership accumulation process according to the selection of the other membership in operation 817.

In operation 819, the user terminal 100 may then request the mobile wallet server 200 to accumulate points for the selected membership.

In an embodiment of the present disclosure, if the user succeeds in joining the corresponding membership in operation 821, the user terminal 100 proceeds to operation 807 and may request that the mobile wallet server 200 accumulate points for the joined membership. If the user fails in joining the membership, the user terminal 100 may proceed to operation 817 and may perform a membership accumulation process according to a selection of another membership. In operation 819, the user terminal 100 may then request the mobile wallet server 200 to accumulate points for the selected membership.

According to an embodiment of the present disclosure, if the user fails in joining the membership, the user terminal 100 may also simply end the process. According to an embodiment of the present disclosure, although the user succeeds in joining the membership, the user terminal 100 may still provide a selection menu for allowing the user to select one of the corresponding memberships and another membership which is previously joined and may request that the mobile wallet server 200 accumulate points for the selected membership(s) according to user selection.

If there is a plurality of memberships for which points may be accumulated in operation 805, the user terminal 100 may determine whether there is membership that a user may join in operation 809. If there is only one membership for which points may be accumulated in operation 805 but wherein the user does not have the membership, operations 811 to 815 may be performed to join the single membership. Herein, in this case, user joining selection is not performed in operation 813, since there is no other membership which may be selected by the user and if the user does not join the single membership, the membership accumulation process may be ended.

Referring again to FIG. 9, a screen 910 refers to an output on a display 160 of a user terminal 100 of FIG. 1 when payment is completed. The screen 910 may be output after, for example, operation 423 of FIG. 4.

The screen 910 may display for example, three memberships for which points may be accumulated in an affiliated store where payment is achieved, together with a payment completion message. For example, membership 901 (e.g., 00 integrated membership), membership 903 (e.g., OK Cashbag), and membership 905 (e.g., Macdonald) may be output as memberships for which points may be accumulated, on the screen 910. Each membership may include an accumulated amount of money or membership points, a predicted accumulated amount of money or membership points, and information about whether a user has each membership. Each of the membership 901 to 905 may display information about an accumulated amount of money (e.g., points) predicted when the user selects the corresponding membership to accumulate points and information about whether the user has the corresponding membership, using text or an icon. For example, if the membership 903 is not a user membership, an icon of a "+" symbol or an image 904 may be provided together indicating a membership that can be added. In case of a membership the user has, a logo corresponding to the membership may be displayed at a corresponding position.

If there is a plurality of memberships for which points may be accumulated, the plurality of memberships may be arranged according to any standard or priority. For example, the plurality of memberships may be arranged in an order based on predicted accumulated amounts of money or membership points (e.g., in the order of 1200 points, 1100 points, and 1000 points). However, the plurality of memberships may be arranged in an order based on more currently accumulated amounts of money or membership points, or may be classified and arranged into memberships that the user has and memberships that the user does not have but is able to join.

The screen 910 may also include a menu 907 for automatically accumulating points for a membership in a next payment for which points are accumulated in the corresponding affiliated store. If the membership 901 is selected and if the menu 907 is selected, the corresponding membership 901 may be automatically selected and an accumulation request for the membership 901 may be automatically transmitted after a next payment which is achieved in the corresponding affiliated store. That is, the user terminal 100 may generate a selection event for the corresponding event and may transmit a selection result to a mobile wallet server 200 of FIG. 1, rather than receiving a user selection input.

When the accumulation for the selected membership is completed on the screen 910, a payment receipt screen 920 may be output on the display 160 of FIG. 1. Information 921, including affiliated store information and payment information such as a payment time and payment amount, and information 923 about membership accumulation, may be displayed together on the screen 920. In a manner similar to selecting automatic accumulation using the menu 907 on the screen 910, the user may also set membership to accumulate points later in the corresponding affiliated store through a menu 925. For example, if the user selects the menu 925, a screen 930 may be output to set membership to accumulate points later in the corresponding affiliated store. Membership to request automatic accumulation may be set by a user input.

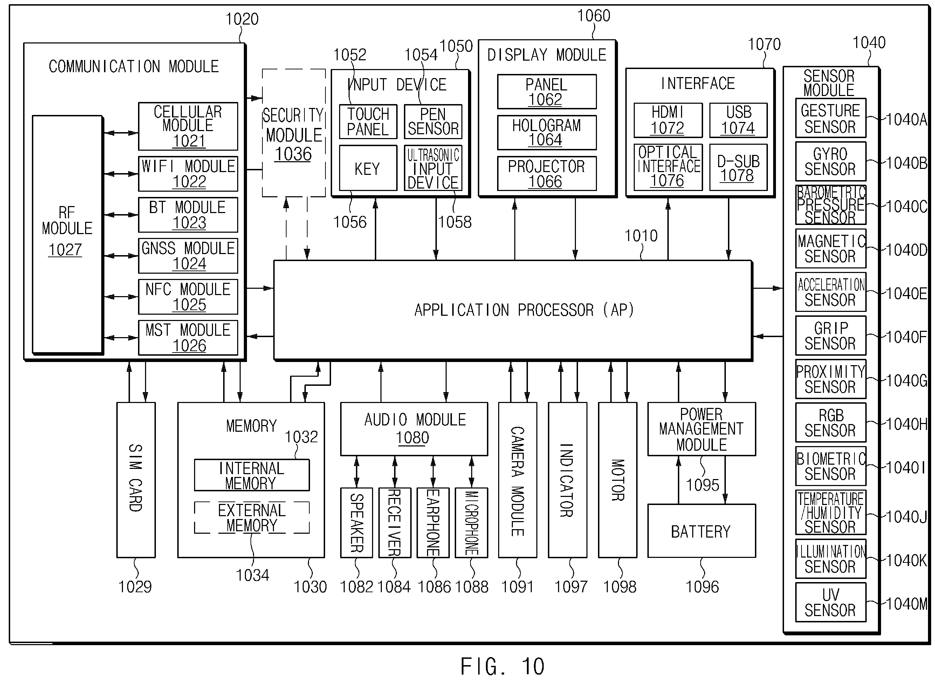

FIG. 10 is a block diagram illustrating a configuration of an electronic device according to various embodiments of the present disclosure.

Referring to FIG. 10, an electronic device 1000 may include, for example, all or part of an electronic device 100 shown in FIG. 2. The electronic device 1000 may include one or more processors 1010 (e.g., APs), a communication module 1020, a subscriber identification module (SIM) 1029, a memory 1030, a sensor module 1040, an input device 1050, a display module 1060, an interface 1070, an audio module 1080, a camera module 1091, a power management module 1095, a battery 1096, an indicator 1097, and a motor 1098.

The processor 1010 may drive, for example, an OS or application program to control a plurality of hardware or software components connected thereto and may process and compute a variety of data. The processor 1010 may be implemented with, for example, a system on chip (SoC) but embodiments are not limited thereto. According to an embodiment of the present disclosure, the processor 1010 may further include a graphics processing unit (GPU) (not shown) and/or an image signal processor (ISP) (not shown). The processor 1010 may include at least some (e.g., a cellular module 1021) of the components shown in FIG. 10. The processor 1010 may load instructions or data received from at least one of the components or other components (e.g., a non-volatile memory) of the device 1000 to a volatile memory to process the data and may store various data and results in a non-volatile memory.

The communication module 1020 may have the same or similar configuration as that of a communication interface 170 of FIG. 2. The communication module 1020 may include, for example, the cellular module 1021, a Wi-Fi module 1022, a BT module 1023, a GNSS module 1024 (e.g., a GPS module, a Glonass module, a Beidou module, or a Galileo module), an NFC module 1025, an MST module 1026, and an RF module 1027.

The cellular module 1021 may provide, for example, a voice call service, video call service, text message service, or Internet service, and the like, through a communication network. According to an embodiment of the present disclosure, the cellular module 1021 may identify and authenticate the electronic device 1000 in a communication network using a SIM (e.g., the SIM 1029). According to an embodiment of the present disclosure, the cellular module 1021 may perform at least some functions which may be provided by the processor 1010. According to an embodiment of the present disclosure, the cellular module 1021 may also include a CP.

The Wi-Fi module 1022, BT module 1023, GNSS module 1024, NFC module 1025, or MST module 1026 may include, for example, a processor for processing data transmitted and received through the corresponding module. According to various embodiments of the present disclosure, at least some (e.g., two or more) of the cellular module 1021, Wi-Fi module 1022, BT module 1023, GNSS module 1024, NFC module 1025, or MST module 1026 may be included in one integrated chip (IC) or one IC package.

The RF module 1027 may transmit and receive, for example, a communication signal (e.g., an RF signal). Though not shown, the RF module 1027 may include, for example, a transceiver, a power amplifier module (PAM), a frequency filter, or a low noise amplifier (LNA), or an antenna, and the like. According to another embodiment of the present disclosure, at least one of the cellular module 1021, Wi-Fi module 1022, BT module 1023, GNSS module 1024, NFC module 1025, or MST module 1026 may transmit and receive an RF signal through a separate RF module.

The SIM 1029 may include, for example, a card which includes a SIM and/or an embedded SIM. The SIM 1029 may include unique identification information (e.g., an integrated circuit card identifier (ICCID)) or subscriber information (e.g., an international mobile subscriber identity (IMSI)).

The memory 1030 (e.g., a memory 130 of FIG. 2) may include, for example, an embedded or internal memory 1032 or an external memory 1034. The internal memory 1032 may include at least one of, for example, a volatile memory (e.g., a dynamic random access memory (DRAM), a static RAM (SRAM), a synchronous DRAM (SDRAM), and the like), or a non-volatile memory (e.g., a one-time programmable read only memory (OTPROM), a PROM, an erasable and programmable ROM (EPROM), an electrically EPROM (EEPROM), a mask ROM, a flash ROM, a flash memory (e.g., a NAND flash memory or a NOR flash memory, and the like), a hard drive, or a solid state drive (SSD)).

The external memory 1034 may further include a flash drive, for example, a compact flash (CF), a secure digital (SD), a micro-SD, a mini-SD, an extreme digital (xD), or a memory stick, and the like. The external memory 1034 may functionally and/or physically connect with the electronic device 1000 through various interfaces.

A security module 1036 may be provided as a module which has a relatively higher security level than that of the memory 1030 and may be a circuit which secures safe data storage and a protected execution environment. The security module 1036 may be implemented with a separate circuit and may include a separate processor. The security module 1036 may be present in, for example, a removable smart chip and an SD card, or may include an embedded secure element (eSE) in a fixed chip of the electronic device 1000. The security module 1036 may also be driven by an OS which is different from that of the electronic device 1000. For example, the security module 1036 may operate according to a java card open platform (JCOP) OS.

The sensor module 1040 may measure, for example, a physical quantity or may detect an operation state of the electronic device 1000, and may convert the measured or detected information into an electric signal. The sensor module 1040 may include at least one of, for example, a gesture sensor 1040A, a gyro sensor 1040B, a barometric pressure sensor 1040C, a magnetic sensor 1040D, an acceleration sensor 1040E, a grip sensor 1040F, a proximity sensor 1040G, a color sensor 1040H (e.g., red, green, blue (RGB) sensor), a biometric sensor 1040I, a temperature/humidity sensor 1040J, an illumination sensor 1040K, or an ultraviolet (UV) sensor 1040M. Additionally or alternatively, the sensor module 1040 may further include, for example, an e-nose sensor (not shown), an electromyography (EMG) sensor (not shown), an electroencephalogram (EEG) sensor (not shown), an electrocardiogram (ECG) sensor (not shown), an infrared (IR) sensor (not shown), an iris sensor (not shown), and/or a fingerprint sensor (not shown), and the like. The sensor module 1040 may further include a control circuit for controlling at least one or more sensors included therein. According to various embodiments of the present disclosure, the electronic device 1000 may further include a processor configured to control the sensor module 1040, as part of the processor 1010 or to be independent of the processor 1010. While the processor 1010 is in a sleep state, the electronic device 1000 may control the sensor module 1040 to remain active.

The input device 1050 may include, for example, a touch panel 1052, a (digital) pen sensor 1054, a key 1056, or an ultrasonic input unit 1058. The touch panel 1052 may recognize a touch input using at least one of, for example, a capacitive detecting method, a resistive detecting method, an infrared detecting method, or an ultrasonic detecting method. The touch panel 1052 may further include a control circuit. The touch panel 1052 may still further include a tactile layer and may provide a tactile reaction to a user.

The (digital) pen sensor 1054 may be, for example, part of a touch panel or may include a separate sheet for recognition. The key 1056 may include, for example, a physical button, an optical key, or a keypad. The ultrasonic input unit 1058 may allow the electronic device 1000 to detect a sound wave using a microphone (e.g., a microphone 1088) and to verify data through an input tool generating an ultrasonic signal.

The display module 1060 (e.g., a display 160 of FIG. 2) may include a panel 1062, a hologram device 1064, or a projector 1066. The panel 1062 may include the same or similar configuration as that of the display 960. The panel 1062 may be implemented to be, for example, flexible, transparent, impact-resistant or wearable. The panel 1062 and the touch panel 1052 may be integrated into one module.

The hologram device 1064 may show a stereoscopic image in a space using interference of light. The projector 1066 may project light onto a screen to display an image. The screen may be positioned, for example, inside or outside of the electronic device 1000. According to an embodiment of the present disclosure, the display 1060 may further include a control circuit for controlling the panel 1062, the hologram device 1064, or the projector 1066.

The interface 1070 may include, for example, an HDMI 1072, a USB 1074, an optical interface 1076, or a D-subminiature 1078. The interface 1070 may be included in, for example, a communication interface 170 shown in FIG. 2. Additionally or alternatively, the interface 1070 may include, for example, a mobile high definition link (MHL) interface, an SD card/multimedia card (MMC) interface, or an infrared data association (IrDA) standard interface.

The audio module 1080 may convert a sound and an electric signal in dual directions. At least some components of the audio module 1080 may be included in, for example, an input and output interface 150 as shown in FIG. 2. The audio module 1080 may process sound information input or output through, for example, a speaker 1082, a receiver 1084, an earphone 1086, or the microphone 1088, and the like. The microphone 1088 included in the audio module 1080 may collect audio data which may be used as input information and remote authentication information or local authentication information.

The camera module 1091 may be a device which captures a still image and a moving image. According to an embodiment of the present disclosure, the camera module 1091 may include one or more image sensors (not shown) (e.g., a front sensor or a rear sensor), a lens (not shown), an ISP (not shown), or a flash (not shown) (e.g., an LED or a xenon lamp).

The power management module 1095 may manage, for example, power of the electronic device 1000. According to an embodiment of the present disclosure, though not shown, the power management module 1095 may include a power management integrated circuit (PMIC), a charger IC or a battery or fuel gauge. The PMIC may have a wired charging method and/or a wireless charging method. The wireless charging method may include, for example, a magnetic resonance method, an acoustic resonance method, a magnetic induction method, or an electromagnetic method, and the like. An additional circuit for wireless charging, for example, a coil loop, a resonance circuit, or a rectifier, and the like, may be further provided. The battery gauge may measure, for example, the remaining capacity of the battery 1096 and voltage, current, or temperature thereof while the battery 1096 is charged. The battery 1096 may include, for example, a rechargeable battery or a solar battery.

The indicator 1097 may display a specific state of the electronic device 1000 or part (e.g., the AP 1010) thereof, for example, a booting state, message state, or charging state, and the like. The motor 1098 may convert an electric signal into mechanical vibration and may generate vibration or a haptic effect, and the like. Though not shown, the electronic device 1000 may include a processing unit (e.g., a GPU) for supporting a mobile TV. The processing unit for supporting the mobile TV may process media data according to standards, for example, a digital multimedia broadcasting (DMB) standard, a digital video broadcasting (DVB) standard, or a MediaFloTM standard, and the like.

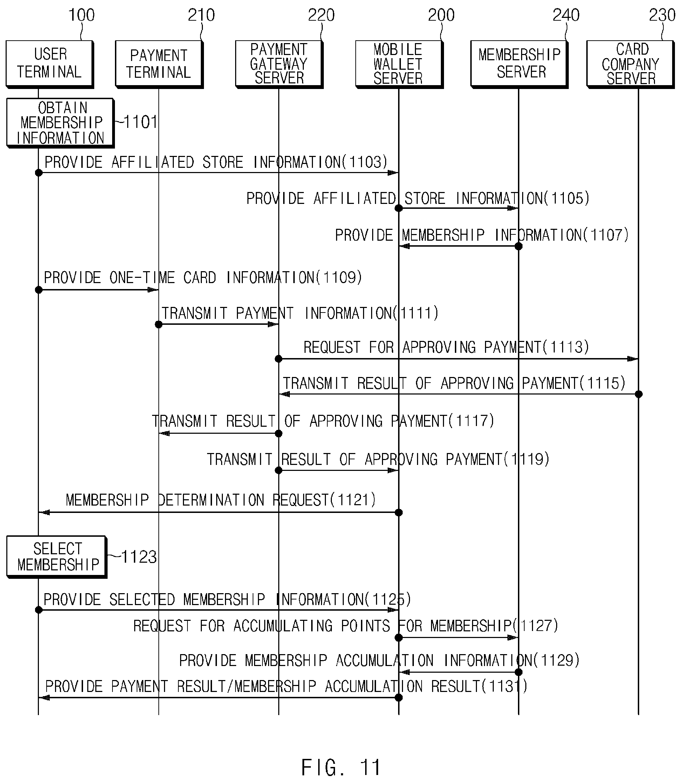

FIG. 11 is a signal sequence diagram illustrating a process of accumulating membership points according to various embodiments of the present disclosure.

Referring to FIG. 11, the signal sequence diagram illustrates another example of a membership accumulation processor described with reference to FIGS. 4 and 6. A description of contents in connection with FIG. 11, which are duplicated by the above-mentioned contents, correspond to the above-mentioned contents, or are substantially similar to the above-mentioned contents, may be omitted. Some of the operations described below with reference to FIG. 11 may be replaced with or supplemented by the above-mentioned corresponding operations.

In a process shown in FIG. 11, rather than obtaining affiliated store information and one-time card information included in a payment approval result (e.g., payment completion information) from a payment gateway server 220 as in FIG. 4, a mobile wallet server 200 may first obtain affiliated store information from a user terminal 100, may additionally obtain one-time card information from the payment gateway server 220, and may provide membership information. The mobile wallet server 200 may provide an additional service through the process by obtaining information about membership managed by an affiliated store in advance, combining information about a financial institution or user information which is included in one-time card information with the previously obtained information about the membership at a time when payment is performed later, and providing a result of inquiring about membership for which points may be accumulated.

Referring to FIG. 11, in operation 1101, a user terminal 100 may obtain affiliated store information. For example, if a mobile wallet application for payment is executed in the user terminal 100, a communication interface 170 of the user terminal 100 may obtain affiliated store information (e.g., identification information) from a payment terminal 210 of the affiliated store or a device (e.g., an access point (AP), a wireless transmitter, and the like) installed in the affiliated store. Herein, the wireless transmitter may include a low frequency beacon, an LED beacon, a Wi-Fi beacon, a BT beacon, and the like. In operation 1103, the user terminal 100 may provide the obtained affiliated store information to a mobile wallet server 200.

In operation 1105, the mobile wallet server 200 may provide the affiliated store information to a membership server 240. In operation 1107, the mobile wallet server 200 may obtain membership information managed by the corresponding affiliated store. When a mobile wallet application is executed or when obtaining affiliated store information, the mobile wallet server 200 may obtain information about a user from the user terminal 100. The mobile wallet server 200 may receive information about whether the user has each membership managed by the affiliated store, together from the membership server 240 through operations 1105 and 1107.

Thereafter, in operation 1109, one-time card information may be provided to a payment terminal 210 by payment performed by the user terminal 100. In operation 1111, the payment terminal 210 may provide payment information to a card company server 230 through a payment gateway server 220. The payment terminal 210 may request through the payment gateway server 220 that the card company server 230 approve payment in operation 1113. When the result of approving the payment is transmitted from the card company server 230 to the payment gateway server 220 in operation 1115, the payment gateway server 220 may transmit the payment approval result to the payment terminal 210 and the mobile wallet server 200 in operations 1117 and 1119.

The mobile wallet server 200 may determine memberships for which points may be accumulated, according to the membership information obtained in operation 1107 and the payment information (e.g., the one-time card information) obtained in operation 1119. In operation 1121, the mobile wallet server 200 may transmit a membership determination request to the user terminal 100. For example, if memberships A1 and A2 of a card A, memberships B1 and B2 of a card B, and membership C1 which may be applied to all of the cards A and B, for which the corresponding affiliated store may accumulate points for the user, are searched in operation 1107, and if a card used to pay is card A, the mobile wallet server 200 may provide information about memberships A1, A2, and C1, as memberships for which points may be accumulated, to the user terminal 100.

If any membership is determined automatically or by user selection in operation 1123, the user terminal 100 may provide information about the selected membership to the mobile wallet server 200 in operation 1125. In operation 1127, the mobile wallet server 200 may request that the membership server 240 accumulate points for the determined membership. If membership accumulation information is provided from the membership server 240 in operation 1129, the mobile wallet server 200 may provide a payment result and/or a membership accumulation result to the user terminal 100 in operation 1131.

Each of the above-mentioned elements of the electronic device according to various embodiments of the present disclosure may be configured with one or more components, and names of the corresponding elements may be changed according to the type of the electronic device. The electronic device according to various embodiments of the present disclosure may include at least one of the above-mentioned elements, some elements may be omitted from the electronic device, or other additional elements may be included in the electronic device. Also, some of the elements of the electronic device according to various embodiments of the present disclosure may be combined to form one entity, thereby making it possible to perform the functions of the corresponding elements in the same manner as before the combination.

The terminology "module" used herein may denote, for example, a unit including one of hardware, software, and firmware, or two or more combinations thereof. The terminology "module" may be interchangeably used with, for example, terminologies "unit", "logic", "logical block", "component", or "circuit", and the like. A "module" may also denote a minimum unit of an integrated component or a part thereof. A "module" may also denote a minimum unit performing one or more functions or a part thereof. A "module" may be mechanically or electronically implemented. For example, a "module" may include at least one of an application-specific integrated circuit (ASIC) chip, field-programmable gate arrays (FPGAs), or programmable-logic device, which is well known or will be developed in the future, for performing certain operations.

According to various embodiments of the present disclosure, at least part of electronic devices (e.g., modules or the functions) or methods (e.g., operations) described above, may be implemented with, for example, instructions stored on a computer-readable storage media which has a program module. When the instructions are executed by a processor or processors (e.g., a processor 120 of FIG. 2), the processors may perform functions corresponding to the instructions. The computer-readable storage media may be, for example, a memory 130 of FIG. 2.

According to an embodiment of the present disclosure, a computer-readable recording medium may store instructions that, when executed by a processor of an electronic device, allow the electronic device to perform payment for goods in an affiliated store using one-time card information, outputting information about at least one membership for which points may be accumulated which is received from an external server and is associated with the payment, and transmitting information about selected membership to the external server if a selection event for one of the at least one membership occurs. In addition, instructions which may perform the above-mentioned methods may be stored in the computer-readable recording medium.

The computer-readable recording medium may include a hard disc, a floppy disk, magnetic media (e.g., a magnetic tape), optical media (e.g., a compact disc ROM (CD-ROM) and digital versatile disc (DVD)), magneto-optical media (e.g., a floptical disk), hardware device (e.g., a ROM, a RAM, or flash memory, and the like), and the like. The program instructions may include mechanical codes compiled by a compiler, and also high-level language codes which may be executed by a computer using an interpreter and the like. The above-mentioned hardware device may be configured to operate as one or more software modules to perform operations according to various embodiments of the present disclosure, and vice versa.

Modules or program modules according to various embodiments of the present disclosure may include at least one or more of the above-mentioned components, and some of the above-mentioned components may be omitted or other additional components may be included. Operations executed by modules, program modules, or other elements according to various embodiments of the present disclosure may be executed by a successive method, parallel method, repeated method, or heuristic method. Some operations may be executed in a different order or may be omitted, and other operations may be added.

According to various embodiments of the present disclosure, a user terminal may solve an inconvenience in which the user separately finds membership cards suitable for an affiliated store and provides the found membership cards to the affiliated store. The various embodiments of the present disclosure allow the user to more easily accumulate points for profitable membership by providing information about all memberships for which points may be accumulated in the affiliated store according to affiliated store information.

According to various embodiments of the present disclosure, the affiliated stores may continuously and easily manage and increase consumers by inviting consumers to join their memberships through the automatically provided information.

According to various embodiments of the present disclosure, the user terminal may also reduce an exposure risk of personal information by using one-time payment information as transaction information and may improve convenience of point management by automatically accumulating points.

While the present disclosure has been shown and described with reference to various embodiments thereof, it will be understood by those skilled in the art that various changes in form and detail may be made therein without departing from the scope of the present disclosure as defined by the appended claims and their equivalents.

## Claims

1. A mobile wallet server for providing a membership service, the mobile wallet server comprising:
a communication module configured to obtain payment completion information, including one-time card information of a user terminal and affiliated store information, from a payment terminal; and
a control module configured to:
determine at least one membership for which points are accumulated according to the affiliated store information, and
determine whether a user of the user terminal has the at least one membership according to the one-time card information,
wherein the control module is further configured to allow the communication module to provide membership information according to the determined results to the user terminal.

2. The mobile wallet server of claim 1, wherein the one-time card information is provided from the mobile wallet server to the user terminal in response to a request of the user terminal or is directly generated by the user terminal.

3. The mobile wallet server of claim 1, wherein the control module is further configured to:
transmit a request for one-time card information received from the user terminal to a financial server, and
provide the one-time card information obtained from the financial server to the user terminal.

4. The mobile wallet server of claim 1,
wherein the communication module is further configured to obtain membership selection information about the provided membership information from the user terminal, and
wherein the control module is further configured to request a membership server to accumulate points for a selected membership.

5. The mobile wallet server of claim 1, wherein the control module is further configured to:
request membership information by providing at least some of the affiliated store information and the one-time card information to the membership server, and
provide the membership information obtained from the membership server to the user terminal.

6. The mobile wallet server of claim 1, wherein, if the determined result comprises a membership for which points are accumulated, the control module is further configured to:
request a membership server to accumulate points for the membership, and
provide the accumulated result to the user terminal.

7. The mobile wallet server of claim 1,
wherein the determined result comprises at least one membership the user does not have, and
wherein, if a selection input for the membership the user does not have is received, the control module is further configured to perform a joining procedure for the membership that the user does not have.

8. A membership service method in a mobile wallet server, the method comprising:
obtaining payment completion information including one-time card information and affiliated store information with respect to payment achieved by a user terminal using the one-time card information;
determining at least one membership for which points are accumulated, according to the affiliated store information;
determining whether a user of the user terminal has the at least one membership according to the one-time card information; and
providing membership information according to the determined results to the user terminal.

9. The method of claim 8, further comprising:
receiving membership selection information about membership information provided from the user terminal; and
requesting a membership server to accumulate points for membership selected by the received membership selection information.

10. The method of claim 9, further comprising:
requesting, if the membership selection information corresponds to information for selecting membership the user does not have, joining the membership the user does not have.

11. The method of claim 9, further comprising transmitting the result of accumulating the points for the membership to the user terminal.

12. The method of claim 8, wherein the information about the at least one membership includes at least one of a name of the at least one membership, a predicted accumulated amount of money or membership points, a currently accumulated amount of money or membership points, or information about whether a user of the user terminal has the at least one membership.

13. The method of claim 8, further comprising:
in response to a request of the user terminal, providing the one time card information to the user terminal.

14. The method of claim 13, wherein the providing the one time card information comprises:
transmitting the request for the one-time card information received from the user terminal to a financial server, and
providing the one-time card information obtained from the financial server to the user terminal.

15. The method of claim 8, wherein the one-time card information is generated based on payment information stored in a memory of the user terminal.
